Europäisches Patentamt

European Patent Office

Office européen des brevets

(19)

(11) **EP 0 949 784 A2**

(12) **EUROPEAN PATENT APPLICATION**

(43) Date of publication:
**13.10.1999 Bulletin 1999/41**

(51) Int Cl.6: **H04L 25/03**, H04L 27/26,
H04Q 11/04

(21) Application number: **99302640.0**

(22) Date of filing: **01.04.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Humphrey, Leslie D.**<br>**Harlow, Essex (GB)** |
| (30) Priority: **06.04.1998 GB 9807403** | (74) Representative: **Dearling, Bruce Clive et al**<br>**Hepworth Lawrence Bryer & Bizley,**<br>**Merlin House,**<br>**Falconry Court,**<br>**Bakers Lane** |
| (71) Applicant: **NORTEL NETWORKS CORPORATION**<br>**Montreal, Quebec H2Y 3Y4 (CA)** | **Epping, Essex CM16 5DQ (GB)** |

(54) **Reduction of cross-talk in broadband systems**

(57)     To reduce the effects of cross-talk in, principally, a wireline communication system (10), idle cells usually required for rate adaptation (32) are substituted by null cells (36) and sequence scrambling (40) required for data protection and associated with traffic is abandoned in relation to the null cell. Subsequent modulation (48) of each null cell is further restricted in the sense that a transmitted power associated with the null cell is, preferably, minimised. In this latter respect, minimum power is achieved within a modulation scheme through a two-stage process. First, a zero level state is selected within a symbol constellation of the modulation scheme (100), and then a confidence level associated with recovery of the zero level state is enhanced by always sending zero values as at least pairs of associated symbols. A receiver (14) then only interprets incoming data as a null cell or the zero level state when all associated symbols are recovered as the zero value. Hence, a metric distance (146) between the zero level state (140) and any other symbol state (102-132) in the constellation (100) is increased to unity by a multidimensional presence of the zero level state.

TRANSMITTING DEVICE 12

FIG.1

TRANSMITTING
DEVICE CONT'D 12

RECEIVING DEVICE 14

TO
CONTROLLER
46

E.O.C.

18

49 48

MODEM
TRANSCEIVER

FROM
SCRAMBLER
40

**FIG.1** Cont'd

CHANEL

16

TRANSCEIVER

60 62

64

BUFFER

66

DETECTOR

72

DE-SCRAMBLER

84 80 76

70

SEQUENCE
GENERATOR

74 86

CELL
DELINEATOR

82 78

FORCE IDLE

ATM CELL

## Description

This invention relates, in general, to an asynchronous transmission mode (ATM) transmission convergence (TC) layer of a digital subscriber line (*x*DSL) system, and especially, but not exclusively, in relation to a very high-speed digital subscriber line (VDSL) system employing a discrete multi-tone (DMT) protocol. More specifically, the present invention relates to a mechanism of enhancing the performance of telecommunication networks that transmit broadband signals over twisted copper-pairs and in which cross-talk corrupts the integrity of transmitted data, such enhancement being maximised during handling of idle cells.

Telecommunication systems that interconnect wireline subscriber terminals are capable of supporting broadband data communication. More particularly, recent developments in broadband communication protocols allow broadband data to be overlaid on narrowband voice or integrated service digital network (ISDN) traffic. Specifically, the interconnection of broadband modems located at the subscriber terminal and at an exchange allow current broadband access systems to communicate on spare spectrum (i.e. spare frequency channels) of a twisted copper-pair communication resource; the spare frequency channels being isolated from conventionally encoded voice signals by a suitable filter. In this respect, and depending upon the complexity of the *x*DSL coding scheme, overlaid broadband systems can support data rates in excess of two Megabits per second (Mbps), although this rate is dependent upon the length of the twisted copper-pairs.

Asymmetric Digital Subscriber Line (ADSL) and High-speed Digital Subscriber Line (HDSL) protocols, for example, can support data rates of 2Mbps over distances of approximately three kilometres, while more complex schemes (such as VDSL) can support data rates of 8Mbps and above over distances of, typically, less than two kilometres. Protocols such as Very high-speed Digital Subscriber Line (VDSL) utilise multiple sub-channel carriers, e.g. in a discrete multi-tone (DMT) environment, to provide an adaptive system that mitigates the effects of cross-talk by selectively ignoring noise-effected sub-channel carriers or reducing the number of bits supported by the sub-channels. As will be appreciated, DMT provides a comb of frequency carriers that are each separated modulated and then combined to generate a composite signal envelope. As such, information (both control information and traffic) is distributed across a number of different frequency carriers.

However, while *x*DSL modulation schemes are sufficiently robust to support symmetrical data rate transmissions and also to provide some limited immunity against noise and general radio frequency interference (RFI), the relative proximately of twisted copper-pairs in a bi-directional communication resource nevertheless still causes significant cross-talk interference to be induced into the wireline system. As will be appreciated, capacitive and inductive coupling and radiation (arising from the imperfect nature and performance of the cabling) are the principal mechanism through which cross-talk arises.

There are two forms of cross-talk that need to be considered; namely Near-End Cross-Talk (NEXT) and Far-End Cross-Talk (FEXT). NEXT occurs when electromagnetic interference (i.e. noise) is induced into a wireline resource that is communicating information in an opposing direction, e.g. downstream (or down-link) information appears as noise in an upstream (or up-link) path and therefore appears at an input port of the transmitting device. In summary, NEXT interferes with received signals that are reflected back into a device and takes the form of a transmitted spectrum that rises at a rate of approximately six decibels (dB) per octave. On the other hand, FEXT occurs when electromagnetic interference (i.e. noise) is induced into a wireline resource that is communicating information in a similar direction, e.g. downstream (or down-link) information appears as noise in another downstream wireline resource. Consequently, FEXT appears at a non-addressed input of a receiving device. The latter form of cross-talk (i.e. FEXT) is of less concern because its effects are reduced by attenuation present in the transmission path.

The effects of cross-talk are further exacerbated by the frequency attenuation characteristics of the cable. Indeed, the level of attenuation in twisted copper-pairs is such as to require equalisation of the received signal prior to detection at a receiver. In fact, equalisation increases significantly with the higher frequency components of the received signal, resulting in NEXT (after equalisation) rising faster than 6dB per octave which in turn limits system capacity at higher frequencies.

In an attempt to address the problems associated with cross-talk, some manufacturers have resorted to echo-cancellation techniques. Unfortunately, while echo cancellation compensates a particular twisted copper-pair for its return duplex path, echo cancellation does not mitigate or even address the effects caused by cross-talk induced by other distinct systems, e.g. *x*DSL modems operating on other twisted copper-pairs. Furthermore, echo cancellation techniques are generally expensive.

Turning attention to an exemplary system application, the effects of cross-talk are particularly propounded when considered in relation to "idle" cell transmission or when logical zeros are communicated in a multi-level symbol, especially when there are many contiguous logical zeros. Specifically, ATM transmission convergence layer methods (such as described in International Telecommunication Union (ITU) recommendation I.432) provide a functional interface between packet-based and bit-stream environments. In particular, the ATM TC generally operates to adapt and regulate a variable cell rate (i.e. the data rate) to a fixed channel capacity by inserting idle cells when there is either no traffic or when cells are already queued and awaiting transmission. Each idle cell further contains a dedicated header that identifies format information pertaining to its associated payload. As will be appreciated, each cell has an overall length of fifty-three bytes of which five are assigned to the header and forty-eight support the payload.

Presently, scrambling of the payload is practised in the ATM transmission convergence layer in xD-SL to prevent false header simulation by the payload. More explicitly, the data in the cell is mixed (typically by an addition or exclusive-OR type function) with a pseudo-random sequence that effectively scrambles the payload, but leaves cell delineation information in the header intact. Consequently, the header and hence the delineation information is recoverable by a receiver without requiring a priori knowledge of the pseudo-random sequence used in the scrambling process. More particularly, the delineation information is used by the receiver to synchronise its complementary pseudo-random signal generator (with that in the transmitter) to recover the scrambled payload. Unfortunately, in an xD-SL-based system, scrambling of the ATM payload in an active link (even in relation to idle cell transmissions) produces a high level of cross-talk into colocated traffic-carrying links.

Furthermore, transmissions generally occur at full power to ensure that modulated information propagates down the wireline to the greatest extent possible, although this increases the effects of cross-talk. Unfortunately, however, lower power transmissions necessarily require additional infrastructure (i.e. relatively expensive repeater stations) to attain the same coverage. Indeed, a system operator is usually reticent solely to bear the cost of such additional equipment to attain a marginal increase in quality of service without providing additional capacity, while an increase in tariff charges to offset costs can affect take-up of the service by subscribers. As such, the deployment of broadband-based xDSL systems is hindered by the requirement for full power transmission and the associated limitation imposed by cross-talk on an attainable quality of service.

GB-A-2 311 196 describes a communication system in which different frequency bands are assigned to different systems, such as VDSL, HDSL and POTS. The systems therefore avoids system compatibility problems arising from interference between the different systems, and specifically interference arising from FEXT and NEXT in a wireline environment. Basically, upstream and downstream spectral utilisation is different in the frequency domain.

EP-A-0 653 859 pertains to a communication system employing a high-speed digital link employing DMT in which an outward path uses a different set of carrier frequencies to a set used in an inward path of the system

WO 98/10528 relies on a mechanism of cancellation to avoid cross-talk problems, and generally provides background only to the present invention. More specifically, the system of WO 98/10528 adaptively estimates the cross-talk interference induced by certain other lines having interfering transmissions with respect to a line dedicated to signals of interest.

A need therefore exists for an improved broadband access scheme that reduces cross-talk, generally, and which therefore improves system performance.

According to a first aspect of the present invention there is provided a method of reducing interference between a plurality of proximally located communication resources, at least one of the communication resources supporting traffic requiring regulation and scrambling of the traffic, the method comprising the steps of: regulating the traffic by selectively including null information; and suspending scrambling in relation to null information.

A preferred embodiment is particularly suitable for substituting idle cells with null information in a packet-based communication protocol.

In a preferred embodiment, the null information is modulated at a relatively low power with respect to information-bearing traffic transmissions. Preferably, the step of modulating the null information includes the step of: selecting a zero level null state within a constellation of a modulation scheme; and sending null information in associated symbols. The number of associated symbols is selected to ensure an increase in confidence such that an inter-symbol distance between the zero level and an another symbol in the constellation is substantially similar to the inter-symbol distance between said another symbol and any other symbol not being the zero value, while the number of associated symbols is dependent upon a number of bits transmitted in each symbol.

In a preferred embodiment it may nevertheless be desirable to selectively include an idle cell in a null cell sequence for cell delineation purposes.

In a second aspect of the present invention there is provided a method of recovering information from incident traffic, comprising the steps of interpreting a zero value in relation to a symbol of the incident traffic only when associated symbols are also each adjudged to contain the zero value.

In a further aspect of the present invention there is provided a method of sending data between communication units interconnected by a plurality of proximally located wireline communication resources that support upstream transmissions and downstream transmissions and in which at least one of the communication resources supports traffic requiring regulation and scrambling of the traffic, the method comprising the steps of: at a transmitting unit: reducing cross-talk interference by regulating traffic by selectively including null information; and suspending scrambling in relation to null information; and at a receiving unit containing a descrambling function to recover information-bearing traffic: buffering incident traffic in a memory; determining the presence of null information from the incident traffic buffered in the memory; disabling a scrambler function in relation to the null information; discarding the null information; and enabling the scrambler function to recover the information-bearing traffic.

The information-bearing traffic typically contains cell synchronisation information used by a synchronisation function of the receiving unit to effect recovery of information-bearing traffic, the preferred method therefore further comprising the steps of: at the transmitting unit: detecting the presence of an idle cell and setting a flag to indicate its presence; and in response to the flag, substituting the idle cell with a null cell containing zero values; and at the receiving unit: detecting the presence of the null cell; and suspending the synchronisation function for the duration of the null cell.

The method may also include at least one of the steps of: at the transmitting unit and in the event that null information has been sent for a predetermined period of time, forcing insertion of an idle cell containing cell synchronisation information; and at the receiving unit and in response to losing synchronisation with the transmitting unit, sending a request to the transmitting unit to send information-bearing traffic containing cell synchronisation information; and at the receiving unit and after a predetermined period, sending a request to the transmitting unit to send information-bearing traffic containing cell synchronisation information.

The method also preferably comprises the steps of sending null information at a relatively low power with respect to information-bearing traffic and the step of, at the transmitting unit, sending null information as a grouping of associated symbols. A receiving unit then only interprets incident traffic as being null information when associated symbols are also each adjudged to contain null information.

In another aspect of the present invention there is provided a communication device for coupling to a wireline resource of a communication system containing a plurality of proximally located communication resources between which interference occurs, the wireline resource supporting traffic that requires regulation and scrambling, the communication device comprising: means for regulating traffic through the selective insertion of null bytes; and means, responsive to the insertion of null bytes, for disabling application of a scrambling function to the null bytes.

Preferably, the communication comprises a modulator for modulating traffic, the modulator responsive to the insertion of null bytes and arranged to modulating the null bytes at a relatively low power with respect to information-bearing traffic.

The communication device may further include means for grouping null bytes as associated symbols.

In a another embodiment, the communication device has means for selectively inserting an idle cell in a sequence of null bytes, which is operationally responsive to a timer and or controller such that a predetermined elapsed time or receipt of a forced insertion request message cause the means for selectively inserting the idle cell to insert an idle cell.

In a further embodiment, the communication device comprises a receiver having a de-scrambling function arranged to recover information-bearing traffic, the receiver further having: a memory for buffering incident traffic; means for determining the presence of null bytes from the incident traffic buffered in the memory; means for disabling the scrambler function in relation to the null bytes; and means for enabling the scrambler function to recover the information-bearing traffic.

In an embodiment of this aspect of the present invention, the communication device further comprises a synchronisation function for synchronising operation of the receiver with a transmitting device from which the traffic emanates and wherein information-bearing traffic contains cell synchronisation information used by a synchronisation function to effect recovery of information-bearing traffic, the communication device then further comprises: means, coupled to the means for determining the presence of null bytes, for suspending the synchronisation function for a predetermined number of null bytes.

In yet another aspect of the present invention there is provided a receiver of a communication system realised by a plurality of proximally located wireline communication resources between which interference occurs, the wireline resource supporting traffic that requires regulation and scrambling, the traffic containing information-bearing symbols and null bytes, the receiver containing: means for determining the presence of null bytes from the incident traffic; means for disabling a de-scrambling function in relation to the null bytes; and means for enabling the de-scrambling function to recover the information-bearing traffic.

The receiver may further include a memory for buffering incident traffic and wherein the means for determining in operation on blocks of traffic buffered in the memory. Typically, the receiver further comprises a synchronisation function for synchronising operation of the receiver with a transmitting device from which the traffic emanates and wherein information-bearing traffic contains cell synchronisation information used by a synchronisation function to effect recovery of information-bearing traffic, the receiver further comprising: means, coupled to the means for determining the presence of null bytes, for suspending the synchronisation function for a predetermined number of null bytes.

The receiver may further comprise means for determining a loss of synchronisation; and means, responsive to the means for determining a loss of synchronisation, for sending a request to the transmitting device requesting that the transmitting device send information-bearing traffic containing cell synchronisation information. Additionally, the receiver may comprise a timing circuit for determining elapsed time from previous receipt of cell synchronisation information; and means for forcing the sending of information-bearing traffic containing cell synchronisation information, the means for forcing operational in response to expiry of a predetermined elapsed time by the timing circuit.

In still yet another aspect of the present invention there is provided a receiver having demodulation circuitry arranged to interpret incident traffic as containing null bytes only when a plurality of associated symbols in the incident traffic are also each adjudged to contain null information.

Typically, the associated symbols are successive symbols, although the associated symbols may be contained on different carriers of a multi-carrier signal envelope. The number of associated symbols needed to adjudge that a received symbol contains the zero value is dependent upon a number of bits transmitted in relation to each symbol.

In another aspect of the present invention there is provided a transmitting communication device arranged to code traffic with a modulation scheme having a symbol constellation in which an inter-symbol distance between a zero level and an another symbol in the symbol constellation differs to the inter-symbol distance between said another symbol and any other symbol in the symbol constellation not being the zero value, the transmitting communication device comprising: a modulator arranged to modulate zero level bytes at a relatively low power with respect to information-bearing symbols; and means for grouping and sending zero level bytes as associated symbols.

The transmitting device is particularly suited for coupling to wireline communication resources.

In another aspect of the present invention there is provided a communication system in which traffic on proximally located wireline communication resources causes interference, at least one of the wireline communication resources supports traffic requiring regulation and scrambling of the traffic, the communication system comprising: a transmitting device having: means for regulating traffic by selectively including null information; and means for suspending scrambling in relation to null information in order to reduce cross-talk between the wireline communication resources; and a receiving device having: a de-scrambling function to recover information-bearing traffic: means for disabling the de-scrambling function in relation to the null information; means for discarding the null information; and means for enabling the de-scrambling function to recover the information-bearing traffic.

In yet another aspect of the present invention there is provided communication device comprising a modulator arranged to modulate symbols carrying no information at a relatively low power relative to a power associated with modulated information-bearing symbols.

In a preferred embodiment, no information is transmitted at zero power. The symbol may be represented by a plurality of sub-channel carriers of a multi-carrier system.

A further aspect of the present invention relates to a communication device comprising a modulator having a constellation of available symbol states, the communication device arranged such power associated with null bytes is minimised within the constellation in relation to a transmitted power level associated with information-bearing bytes.

In a final aspect of the present invention there is provided a method of transmitting information comprising modulating symbols carrying no information at a relatively low power relative to a power associated with modulated information-bearing symbols.

The present invention therefore advantageously reduces the detrimental effects associated with cross-talk in a communication system, thus improving confidence in data recovery and enhancing distances over which such modulation schemes can effectively be used. The present invention is particularly applicable to broadband wireline architectures that employ xDSL schemes.

Furthermore, the aspect of the present invention concerned with requiring low power modulation of the zero level (or null) state in associated (or adjacent) symbols increases the confidence level associated with the recovery and accurate interpretation of these modulated symbols.

An exemplary embodiment of the present invention will now be described with reference to the accompanying drawings, in which:

FIG. 1 shows a functional block diagram of a communication system according to a preferred embodiment of the present invention; and
FIG. 2 illustrates a constellation diagram for a typical modulation scheme having quadrature components.

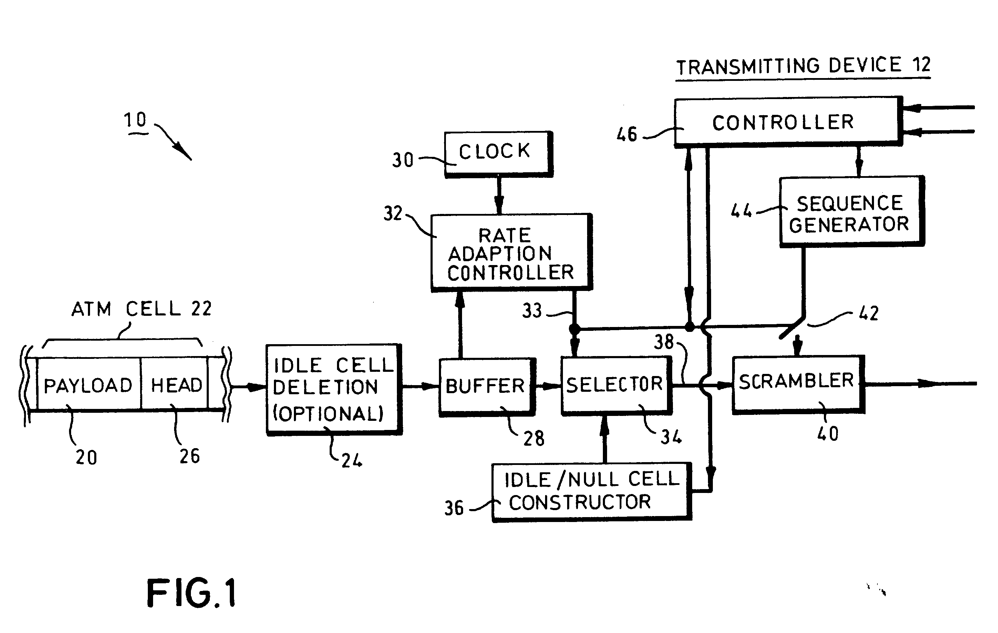

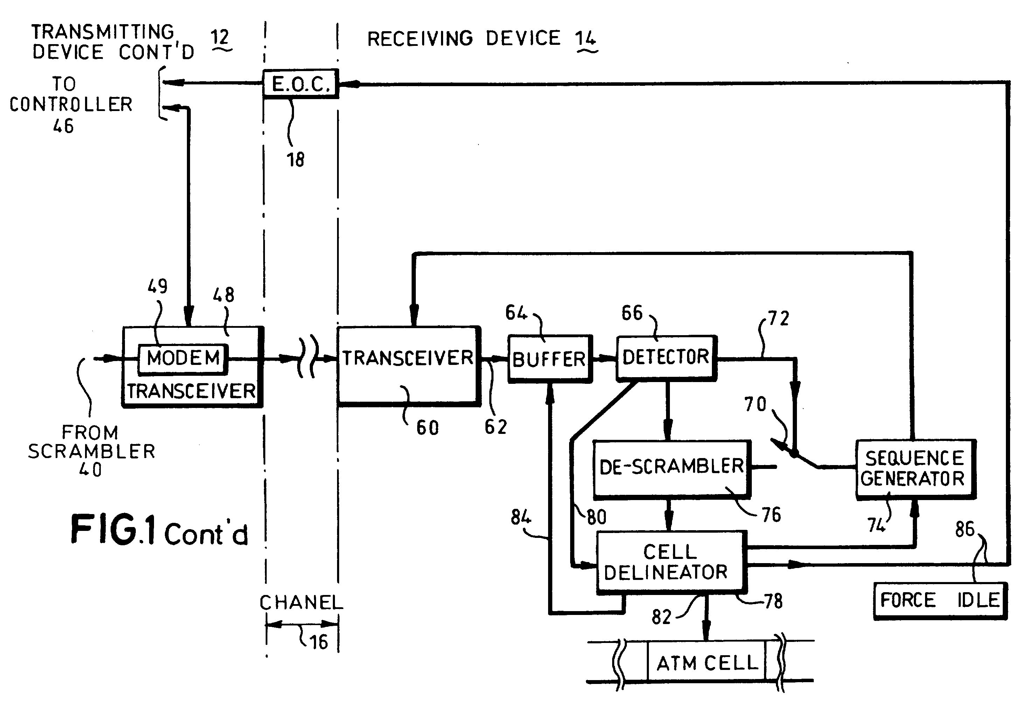

Referring to FIG. 1, there is shown a functional block diagram of a communication system 10 according to a preferred embodiment of the present invention. The system 10 contains a transmitting device 12, a receiving device 14 and a channel 16 for communicating information therebetween. The channel may support any one of a number of transmission mediums, including wireline communication resources, optical fibres and a radio frequency (RF) environment. Furthermore, the channel 16 typically has a fixed channel capacity.

In this context of the FIG. 1, it will be understood that the transmit and receive functions merely exemplify directional transfer of traffic, although both the transmitting device 12 and the receiving device 14 may, in fact, be realised by transceiver equipment supporting two-way voice or data traffic. Furthermore, the channel 16 will typically include some form of feedback mechanism for control purposes, e.g. an engineering control or embedded operations channel (e.o.c) 18, and so is usually capable of providing at least some limited form of bi-directional communication (if not inherently being arranged to support full duplex or half-duplex communication). The purpose of the engineering control channel 18 will be discussed later with respect to a particular embodiment of the present invention. Furthermore, while the engineering control channel is a separate entity, it will be understood that this control channel is usually multiplexed or embedded with the voice and/or data path, but it could equally well be separate.

The present invention has identified that if the primary payload is data (such as acquired from web browsing) or if the average traffic content is much less than the channel capacity (even in the case of constant bit rate video) then a mechanism that effectively reduces idle cell transmissions required for maintaining a defined channel format can drastically reduce ensemble crosstalk from all communication resources on a multi-pair cable. Indeed, if idle cell transmission can be reduced or inhibited, then the communication system can benefit from increased performance margin, increased data capacity and extended reach. These desirable advantages are obtained in a preferred embodiment of a first aspect of the present invention by replacing idle cells with null bytes and then by-passing the scrambling function.

In relation to the transmit stream, data 20 (represented for exemplary purposes as an ATM cell 22) is optionally applied to an idle cell deletion block 24 arranged to selectively delete idle cells (identified by header information 26). In this way, the concepts of the present invention can be applied to existing systems in which idle cells have been externally inserted. Buffering of successive ATM cells occurs in buffer 28, typically realised by a first in, first out (FIFO) register/memory. A clock 30 provides a timing function to a rate adaptation controller 32 that is responsive to the buffer 28. The rate adaptation controller operates to regulate the data flow to the available channel capacity, and functions to cause the delay of ATM cells within the buffer 28 or to indicate (via data line 33) to a selector circuit 34 (e.g. a processor) that it should (usually) insert null bytes. The data line 33 consequently acts to support a flag arbitrarily selected as a logical one, which flag is set for the length of idle cell, for example. The rate adaptation controller 32 can therefore be realised as an autonomous device that has no associated intelligence but which reacts to each clock cycle and the presence of data in the buffer 28.

An idle/null cell constructor circuit 36 is coupled to the selector circuit 34, which idle/null cell constructor circuit 36 provides blocks of fifty-three null bytes to the selector circuit 34 upon request therefrom. A secondary function of the idle/null cell constructor circuit 36 is selectively to provide idle cells to the selector circuit 34 for insertion into the communication path; the reason for requiring occasional insertion of idle cells will become apparent later.

A stream of data 38 comprised from contiguous ATM cells, null bytes and occasional idle cells is output from the selector circuit 34 at a predetermined rate. The stream of data 38 is applied to a scrambler circuit 40 that performs an additive scrambling function. In a preferred embodiment, the scrambler circuit 40 is a modulo two adder that is coupled through a gated switch 42 to a pseudo-random sequence generator (PRSG) 44. The PRSG is coupled to a controller 46, which controller 46 is further coupled to the gated switch 42 for selective operational control thereof. The gated switch 42 is also responsive to the flag provided by the data line 33.

The scrambler circuit 40, the gated switch 42 and the PRSG 44 co-operate in the following (default) manner. Provided that the flag is set on data line 33, then fifty-three successive null bytes (constituting an ATM cell) are inserted by the selector circuit 34. The flag on data line 33 causes the gated switch to open to isolate the PRSG 44 from the scrambler circuit 40. Consequently, the fifty-three successive null bytes are passed in an unaltered state to transceiver circuitry 48, which transceiver circuitry contains, amongst other components, a modem 49, amplifiers and frequency conversion circuitry (as necessary, but not shown for clarity). An output from the transceiver circuitry 48 is applied to the channel 16. In this way, the preferred embodiment of the present invention attempts to insert as many unaltered null bytes into the data as is possible.

The transceiver circuitry 48 is also coupled to the controller 46 and hence can be informed of the flag being set on the data line 33. The modem of the transceiver may also include a scrambling circuit that operates in accordance with the preferred embodiment of the present invention, but this is optional and will not be described in detail for the reason of brevity. Furthermore, the general construction of the transceiver circuitry will be readily understood by the skilled addressee.

As will now be understood, generation of the flag on the data line 33 identifies a persistent period of all zeros (i.e. null bytes). In the physical media dependent (PMD) transport layer of the transmitting device 14 (i.e. the transceiver circuitry 48), the modem 49 in controlled by the controller 46 to ensure that null bytes are modulated at relatively low power (or at no power at all). A mechanism that ensures low (and, in fact, minimum) power transmissions of modulated null bytes will be described subsequently and in relation to a complementary or independent aspect of the present invention.

It is not practical to send the flag from data line 33 because the channel may corrupt the information content of the flag, and this nevertheless requires an allocated bandwidth. However, the mechanism of the preferred embodiment of the present invention provides a transparent system with high reliability.

Following transmission across the channel 16, data (in the form of ATM cells in the preferred embodiment) is covered by second transceiver circuit 60 of the receiving device 14. The second transceiver circuit 60 contains a modem (not shown) and provides recovered ATM cells 62 to a second buffer 64 for temporary storage. The second buffer 64 typically stores several hundred cells, but at least has a capacity to store one complete cell, i.e. fifty-three bytes of information. Cells released or extracted from the second buffer 64 are applied to a detector function 66 that is configured to detect null bytes, although the detector may also expressly detect idle cells and header information. In this respect, the detector function 66 acts to control a subsequent decoding process in the receiver device 14.

A second switch 70 is operationally responsive to a control signal 72 generated by the detector function 66, which control signal is made arbitrarily a logical one in the presence of a detected null cell in second buffer 64. The presence or absence of the control signal 72 operates the second switch 70 to selectively couple a second PRSG 74 to a de-scrambler function 76 that is both operationally responsive to the detector function 66 and coupled to the buffer to receive cells. As such, in the presence of a null cell, the second switch 70 is opened to bypass the application of a pseudo-random sequence to the de-scrambler function 76 and hence to disable the de-scrambler function 76.

Furthermore, the detector function 66 is coupled to a cell delineator 78 that generally operates to recover header information and to provide synchronisation information to the second PRSG 74 and the second transceiver circuit 60. However, in the presence of a detected null cell, operation of the cell delineator 78 is suspended by a null cell flag 80 until the null cell flag is removed. In this way and on a cell-by-cell basis, buffered null cells can be discarded (in the same way as idle cells are discarded in a conventional prior art receiver). Suspension of the operation of the cell delineator 78 therefore prevents an induced cell delineation anomaly being generated that would otherwise trigger a fault condition and immediately cause synchronisation re-establishment.

In a preferred embodiment, the de-scrambler function 76 is realised by a complementary modulo two adder, which co-operates with the second PRSG 74 to decode ATM payloads in the event that the detector function 66 fails to identify a null cell. Furthermore, in the absence of a null cell flag, the de-scrambler function 76 the second PRSG 74 and the cell delineator 78 co-operate to recover scrambled information from the scrambled ATM cells received by the receiving device 14, where recovered ATM cells appear as information output 82 in the ATM layer.

Synchronisation information, as will be understood, is generally made available within the header of the ATM cell. Additionally, the second buffer is further coupled to a control line 84 from the cell delineator 78 to ensure that the recovery process is synchronised to cell boundaries, i.e. consecutive fifty-three byte sequences are treated and processed as an entire cell.

Since synchronisation must be maintained between the respective sequence generators in the transmitting and receiving devices, cell delineation information must necessarily and occasionally be provided to the receiving device 14 (in some xDSL schemes). The cell delineator 78 functions to determine and maintain synchronisation, but in the absence of header information over relatively long periods (because of null cell insertion) synchronisation may wander or be lost altogether. Therefore, in the event that synchronisation is lost, the cell delineator 78 is arranged to generate a forced idle cell insertion message 86 that is communicated to the transmitting device 12 typically within the engineering control channel 18. In other words, if the receiving device is no longer able to interpret headers, then the receiving device drops out of sink and triggers generation of a forced idle cell insertion message 86.

Returning to the transmitting device 12, the controller 46 is responsive to the engineering control channel 18 and hence receives the forced idle cell insertion message 86. In response to this message, the controller overrides null cell insertion by closing the gated switch 42 and engaging the first PRSG 44. Contemporaneously, the controller instructs the idle/null cell constructor 36 to provide an idle cell to the selector for insertion into the data, whereafter the scrambler 40 functions to scramble the idle cell payload. Transmission of the idle cell across the channel 16 therefore trips detector 66 and causes the cell delineator 78 to become active. Header information associated with the idle cell is therefore recovered and the receiving device 14 can once again acquire synchronisation with the transmitting device 12 by virtue of remote cell delineation reacquisition.

The forced idle cell insertion message 86 may also act to substitute idle cell insertion in place of null cells to keep equalisation adaptation alive. Alternatively, rather than having to provide a dedicated return path for a dedicated forced idle cell insertion message 86, another embodiment of the present invention has the controller in the transmitting device 12 periodically generate an interrupt with respect to null cell insertion. The controller then instructs at least one idle cell to be inserted into the information flow before re-commencing null byte (and null cell) insertions.

In relation to training, i.e. the forced insertion of an idle cell, a preferred embodiment of the present invention contemplates that training of each of the multiple twisted pairs could be staggered so as to avoid cross-talk generation between multiple cross-talk sources.

It will be understood that VDSL may be exempt from having to force an idle cell insertion at the transmitting device 12 because VDSL actually counts bytes and so avoids the issue of maintaining synchronisation using a cell delineation process.

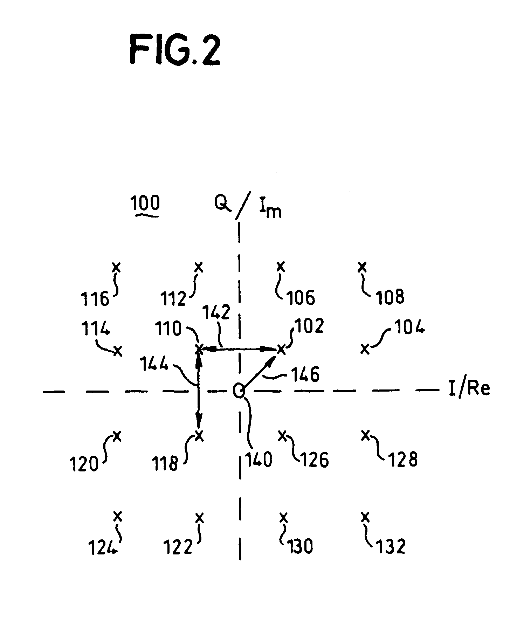

FIG. 2 illustrates a constellation diagram 100 for a typical modulation scheme having quadrature components. In fact, FIG. 2 is representative of a sixteen-state quadrature amplitude modulation (QAM) scheme. Basically, sixteen states 102-132 are equally distributed throughout the constellation 100, with any one state represented by an amplitude and phase relative to an origin, O (reference numeral 140). In QAM and multi-carrier schemes, such as discrete multitone (DMT), a zero value can be added within the constellation, which zero state in the case of FIG. 2 is the origin 140. However, in relation to such a zero level state, it is difficult to differentiate this state from adjacent lower level states. Specifically, although each point in the constellation is separated by unitary distance 142-144, the location of the origin 140 within the constellation means that its minimum distance separation 146 to an adjacent state (such as state 102) is less than unity, namely

$$\frac{1}{\sqrt{2}}$$

. Consequently, the confidence level associated with receiving and correctly interpreting the zero value state is significantly reduced.

The second aspect of the present invention adopts a process in which the zero value is only ever modulated and transmitted in at least a pair of contiguous (or successive) symbols. Moreover, the values are only interpreted as being zero at the receiving device 14 if the pair are both successfully recognised as being zero; this therefore returns the confidence level back to unity. From a practical standpoint, received signals for associated constellations (or symbols) are equalised and scaled to provide a constellation step size of one.

To improve confidence in the receipt of a zero value, it is necessary to review symbols in relation to four dimensional symbol space to guarantee that the inter-level distance is at least unity. The reason for requiring at least a pair of symbols will be better understood in relation to a multi-carrier environment in which a single channel may only relay a single bit of information. More especially, if we consider three carriers that support a five-bit, a two-bit and a one-bit state, then constellation diagrams for these carriers can be represented by a thirty-two point constellation, a four-point constellation and a linear two-point constellation, respectively. The linear two-point constellation only provides a single dimension in symbol space, whereas the thirty-two point and four-point constellations each provide two dimensions and so three successive carriers are required to attain the four-dimension confidence. In other words, the mean square distance between adjacent zero level states in adjacent symbols increases to unity by extending a metric calculation to all dimensions for a maximum of four carriers with one bit each.

In the case of a DMT-type system, an association between carriers is arbitrary and may be based on adjacent frequency carriers, although this need not be the case. All that is necessary is to determine that all associated carriers successively carry the (dual) zero value in order to attain the confidence of a null cell transmission. The association can be stored in a memory cache internal of a digital signal processor that realises the detector function of FIG. 2.

From the foregoing, it will now be appreciated that a generalised case arises when block-encoded compound symbols are used, such as in DMT. The transceiver 48 of FIG.1 includes an information buffer storing information to be encoded on a single DMT symbol. In the case when all the contents of the information buffer are null, then a null DMT symbol can be transmitted (even to an extent that auxiliary information carried in the symbol is also omitted). In the receiver, one only needs to detect the absence of symbol power to imply the transport of a buffer of null information and to maintain correct operation of any auxiliary channels.

It will, of course, be appreciated that the above description has been given by way of example only and that modification in detail may be made within the scope of the present invention. For example, while the detailed description has concentrated on describing the dual or multiple null modulation technique (and data recovery mechanism) for idle/null cell transfer as being in relation to a wireline communication resource, this aspect of the invention is also applicable to a radio frequency environment, for example. Indeed, by requiring successive null states there is an increase in the confidence of the result that protects data recovery and prevents misinterpretation of logical zero transfers. Additionally, the preferred embodiment recites the application of null cells within an ATM cell environment, although it will be clearly appreciated that the insertion of null cells and the disablement of scrambling and a complementary descrambling function is equally applicable to other packet based techniques. Furthermore, the underlying inventive concept of substituting null cells and by-passing scrambling has equal applicability to unassigned cells typically added at the ATM layer. Indeed, the present invention is also applicable to other packetised or cell-based systems, such as Internet protocol (IP) based networks. In addition, the use of unscrambled null cells to reduce cross-talk is not restricted to bi-directional systems since the it is equally applicable to a unidirectional communication that suffers solely from FEXT.

The zero value substitution method of the second aspect can be extended to other forms of modulation, including single-dimensional schemes, e.g. Pulse Amplitude Modulation (PAM).

The skilled reader will appreciate that the term "symbol" has been used in a way and requires consideration in terms of the context in which it is used. In this respect, the skilled addressee will realise that the term "symbol" may therefore refer, as the context requires, to: a grouping of bits prior to a constellation encoding; or a constellation value; or, in a multi-carrier system, a multiplicity of or ensemble of carriers.

It will be appreciated that certain aspects underlying the preferred embodiments can be implemented independently of one another.

In this respect, one aspect is realised by communication device for coupling to a wireline resource of a communication system containing a plurality of proximally located communication resources between which interference occurs, the wireline resource supporting traffic that requires regulation and scrambling, the communication device comprising: means for regulating traffic through the selective insertion of null bytes; and means, responsive to the insertion of null bytes, for disabling application of a scrambling function to the null bytes. In a preferred embodiment, the modulator responsive to the insertion of null bytes and arranged to modulating the null bytes at a relatively low power with respect to information-bearing traffic.

In complementary or independent embodiment, the communication device further comprises: means for grouping null bytes as associated symbols; and/or means for selectively inserting an idle cell in a sequence of null bytes.

The communication device may comprise at least one of: a timer for determining an elapsed time since a previous transmission of an idle cell; and a controller arranged to receive a forced insertion request message; and wherein the means for selectively inserting the idle cell is, respectively, operationally responsive to the timer and the controller such that a predetermined elapsed time and receipt of the forced insertion request message cause the means for selectively inserting the idle cell to insert an idle cell.

The communication device may comprise a receiver having a de-scrambling function arranged to recover information-bearing traffic, the receiver further having: a memory for buffering incident traffic; means for determining the presence of null bytes from the incident traffic buffered in the memory; means for disabling the de-scrambling function in relation to the null bytes; and means for enabling the de-scrambling function to recover the information-bearing traffic.

The receiver may therefore possess means for discarding the null bytes.

The communication device incorporating the receiver may further comprise a synchronisation function for synchronising operation of the receiver with a transmitting device from which the traffic emanates and wherein information-bearing traffic contains cell synchronisation information used by a synchronisation function to effect recovery of information-bearing traffic, the communication device further comprising: means, coupled to the means for determining the presence of null bytes, for suspending the synchronisation function for a predetermined number of null bytes, and preferably wherein the predetermined number of null bytes is a null cell.

Additionally and/or alternatively, the communication device incorporating the receiver may comprise: means for determining a loss of synchronisation; and means, responsive to the means for determining a loss of synchronisation, for sending a request to the transmitting device requesting that the transmitting device send information-bearing traffic containing cell synchronisation information.

The receiver may have a timing circuit for determining elapsed time from a previous receipt of cell synchronisation information and wherein the receiver may further comprise means for forcing the sending of information-bearing traffic containing cell synchronisation information, the means for forcing operational in response to expiry of a predetermined elapsed time by the timing circuit.

The receiver is preferably arranged to interpret incident traffic as containing null bytes only when associated symbols are also each adjudged to contain null information.

As regards another aspect of the present invention, there is provided (as previously indicated) a receiver of a communication system realised by a plurality of proximally located wireline communication resources between which interference occurs, the wireline resource supporting traffic that requires regulation and scrambling, the traffic containing information-bearing symbols and null bytes, the receiver containing: means for determining the presence of null bytes from the incident traffic; means for disabling a de-scrambling function in relation to the null bytes; and means for enabling the de-scrambling function to recover the information-bearing traffic.

Preferably, the receiver includes a memory for buffering incident traffic and wherein the means for determining operates on blocks of traffic buffered in the memory. Additionally or alternatively, the receiver of this particular aspect further includes means for discarding the null bytes.

As previously indicated, a further aspect of the present invention is realised by a communication system in which traffic on proximally located wireline communication resources causes interference, at least one of the wireline communication resources supports traffic requiring regulation and scrambling of the traffic, the communication system comprising: a transmitting device having: means for regulating traffic by selectively including null information; and means for suspending scrambling in relation to null information in order to reduce cross-talk between the wireline communication resources; and a receiving device having: a de-scrambling function to recover information-bearing traffic: means for disabling the de-scrambling function in relation to the null information; means for discarding the null information; and means for enabling the de-scrambling function to recover the information-bearing traffic.

In a preferred embodiment, the receiving device further comprises: a memory for buffering incident traffic; and means for determining the presence of null information from the incident traffic buffered in the memory.

Typically, the information-bearing traffic contains cell synchronisation information used by a synchronisation function of the receiving unit to effect recovery of information-bearing traffic, wherein: the transmitting device further comprises: means for detecting the presence of an idle cell and for setting a flag to indicate its presence; and means for substituting the idle cell with a null cell containing zero values, said means for substituting responsive to the flag; and wherein the receiving device further comprises: means for detecting the presence of the null cell; and means for suspending the synchronisation function for the duration of the null cell.

Additionally or alternatively, the transmitting device includes a modulator that operates to send null information at a relatively low power with respect to information-bearing traffic.

Additionally or alternatively, the transmitting device (12) is arranged to send null information as a grouping of associated symbols.

Additionally or alternatively, the receiving device of this particular aspect may further comprise means for interpreting incident traffic as being null information only when associated symbols are also each adjudged to contain null information.

**Claims**

1.  A method of reducing interference between a plurality of proximally located communication resources, at least one of the communication resources supporting traffic requiring regulation and scrambling of the traffic, the method comprising the steps of:

    regulating the traffic by selectively including (34, 36) null information; and
    suspending (40, 42) scrambling in relation to null information.

2.  The method of claim 1, further comprising the step of substituting (24) idle cells with null information.

3.  The method of claim 2, wherein the idle cells regulate (32) a data rate of the traffic.

4.  The method of claim 1, 2 or 3, further comprising the step of substituting unassigned cells with null information.

5.  The method of any preceding claim, further comprising the step of modulating the null information at a relatively low power with respect to usual traffic transmissions.

6.  The method of claim 5, wherein the step of modulating the null information includes the step of:

    selecting a zero level null state within a constellation of a modulation scheme; and
    sending null information in associated symbols.

7.  The method of claim 6, wherein the step of sending null information in associated symbols further includes the step of sending null information as successive associated symbols.

8.  The method of claim 7, wherein the step of sending null information in associated symbols further includes the step of sending null information on associated carriers of a multi-carrier communication system, which associated carriers are preferably on adjacent frequencies.

9.  The method of any one of claims 7 or 8, wherein a number of associated symbols containing null information is dependent upon a number of bits transmitted in each symbol.

10. The method of claim 9, wherein the number of associated symbols is selected to ensure an increase in confidence such that an inter-symbol distance between the zero level and an another symbol in the constellation is substantially similar to the inter-symbol distance between said another symbol and any other symbol not being the zero value.

11. The method of claim 2, further comprising the step of selectively including an idle cell in a null cell sequence for cell delineation purposes.

12. The method of claim 11, wherein the step of selectively including the idle cell is triggered in response to at least one of the following steps:

    exceeding a predetermined time from a previous transmission of an idle cell; and
    receiving an instruction to include an idle cell.

13. A method of recovering information from incident traffic, comprising the steps of interpreting a zero value in relation to a symbol of the incident traffic only when associated symbols are also each adjudged to contain the zero value.

14. The method of claim 13, wherein the associated symbols are successive symbols.

15. The method of claims 13 or 14, wherein a number of associated symbols containing the zero value is dependent upon a number of bits transmitted in relation to each symbol.

16. The method of claim 15, wherein the number of associated symbols is selected to ensure an increase in confidence in interpreting the zero value such that an inter-symbol distance in a symbol constellation between the zero level and an another symbol in the symbol constellation substantially corresponds to the inter-symbol distance between said another symbol and any other symbol in the symbol constellation not being the zero value, and preferably wherein the number of associated symbols provides at least four dimensions in symbol space.

17. A method of sending data between communication units (12, 14) interconnected by a plurality of communication resources (16, 18) that support upstream transmissions and downstream transmissions and in which at least one of the communication resources supports traffic requiring regulation and scrambling of the traffic, the method comprising the steps of:

at a transmitting unit (12):

reducing cross-talk interference by regulating traffic by selectively including null information (34, 36); and
suspending scrambling (40, 42) in relation to null information; and

at a receiving unit (14) containing a de-scrambling function (76) to recover information-bearing traffic:

buffering incident traffic in a memory (64);
determining (66) the presence of null information from the incident traffic buffered in the memory (64);
disabling (70) the scrambling function in relation to the null information;
discarding the null information; and
enabling the scrambling function to recover the information-bearing traffic.

18. The method of claim 17, wherein the information-bearing traffic contains cell synchronisation information used by a synchronisation function of the receiving unit to effect recovery of information-bearing traffic, the method further comprising the steps of:

at the transmitting unit (12):

detecting (24) the presence of an idle cell and setting a flag to indicate its presence; and
in response to the flag, substituting the idle cell with a null cell containing zero values; and

at the receiving unit (14):

detecting (66) the presence of the null cell; and
suspending the synchronisation function for the duration of the null cell.

19. The method of claim 17 or 18, further comprising at least one of the steps of:

at the transmitting unit (12) and in the event that null information has been sent for a predetermined period of time, forcing insertion of an idle cell containing cell synchronisation information; and
at the receiving unit (14) and in response to losing synchronisation with the transmitting unit, sending a request to the transmitting unit (12) to send information-bearing traffic containing cell synchronisation information; and
at the receiving unit (14) and after a predetermined period, sending a request (86) to the transmitting unit (12) to send information-bearing traffic containing cell synchronisation information.

20. The method of claim 17, 19 or 19, further comprising the step of sending null information at a relatively low power with respect to information-bearing traffic.

21. The method of any one of claims 17 to 20, further comprising the step of, at the transmitting unit, sending null information as a grouping of associated symbols.

22. The method of claim 21, further comprising the step of, at the receiving unit, interpreting incident traffic as being null information only when associated symbols are also each adjudged to contain null information.

23. A communication device (12-14) for coupling to a wireline resource (16) of a communication system (10) containing a plurality of proximally located communication resources between which interference occurs, the wireline resource supporting traffic that requires regulation and scrambling, the communication device comprising:

means (36) for regulating traffic through the selective insertion of null bytes; and
means (42), responsive to the insertion of null bytes, for disabling application of a scrambling function (40) to the null bytes.

24. The communication device of claim 23, further comprising a modulator (48) for modulating traffic (38), the modulator responsive to the insertion of null bytes and arranged to modulating the null bytes at a relatively low power with respect to information-bearing traffic.

25. The communication device of claim 23 or 24, further comprising means for grouping null bytes as associated symbols.

26. The communication device of any one of claims 23, 24 or 25, further comprising a receiver having a de-scrambling function arranged to recover information-bearing traffic, the receiver further having:

a memory (64) for buffering incident traffic;
means (66) for determining the presence of null bytes from the incident traffic buffered in the memory;
means (70, 78) for disabling the de-scrambling function in relation to the null bytes; and
means for enabling the de-scrambling function to recover the information-bearing traffic.

27. The communication device of claim 26, wherein the receiver interprets incident traffic as containing null bytes only when associated symbols are also each adjudged to contain null information.

28. A receiver (14) of a communication system (10) realised by a plurality of proximally located wireline communication resources (16) between which interference occurs, the wireline resource supporting traffic that requires regulation and scrambling, the traffic containing information-bearing symbols and null bytes, the receiver containing:

means (66) for determining the presence of null bytes from the incident traffic;
means (70) for disabling a de-scrambling function in relation to the null bytes; and
means for enabling the de-scrambling function to recover the information-bearing traffic.

29. The receiver of any one of claims 28, wherein the receiver is arranged to interpret incident traffic as containing null bytes only when a plurality of associated symbols are also each adjudged to contain null information.

30. A receiver (14) having demodulation circuitry arranged to interpret incident traffic as containing null bytes only when a plurality of associated symbols in the incident traffic are also each adjudged to contain null information.

31. The receiver of claim 30, wherein the associated symbols are:

a) successive symbols; or
b) contained on different carriers of a multi-carrier signal envelope, and more preferably wherein the different carriers are adjacent sub-channel tones.

32. The receiver of any one of claims 30 or 31, wherein a number of associated symbols adjudged to contain the zero value is dependent upon a number of bits transmitted in relation to each symbol.

33. The receiver of claim 32, wherein the number of associated symbols is selected to ensure an increase in confidence in interpreting the zero value such that an inter-symbol distance in a symbol constellation between the zero level and an another symbol in the symbol constellation substantially corresponds to the inter-symbol distance between said another symbol and any other symbol in the symbol constellation not being the zero value.

34. A transmitting communication device (12) arranged to code traffic with a modulation scheme having a symbol constellation in which an inter-symbol distance between a zero level and an another symbol in the symbol constellation differs to the inter-symbol distance between said another symbol and any other symbol in the symbol constellation not being the zero value, the transmitting communication device comprising:

a modulator (48) arranged to modulate zero level bytes at a relatively low power with respect to information-bearing symbols; and
means for grouping and sending zero level bytes as associated symbols.

35. A communication system (10) in which traffic on proximally located wireline communication resources (16) causes interference, at least one of the wireline communication resources supports traffic requiring regulation and scrambling of the traffic, the communication system comprising:

a transmitting device (12) having:

means (32, 36) for regulating traffic by selectively including null information; and
means (42-46) for suspending scrambling in relation to null information in order to reduce cross-talk between the wireline communication resources; and

a receiving device (14) having:

a de-scrambling function (76) to recover information-bearing traffic:
means (70) for disabling the de-scrambling function in relation to the null information;
means for discarding the null information;

and
means for enabling the de-scrambling function to recover the information-bearing traffic.

36. The communication system (10) of claim 35, wherein the transmitting device includes a modulator (48) that operates to send null information at a relatively low power with respect to information-bearing traffic.

37. The communication system of any one of claims 35 or 36, wherein the transmitting device (12) is arranged to send null information as a grouping of associated symbols.

38. A communication device comprising a modulator arranged to modulate symbols carrying no information at a relatively low power relative to a power associated with modulated information-bearing symbols.

39. The communication device of claim 38, wherein no information is transmitted at zero power.

40. The communication device of claim 38, wherein symbols are represented by a plurality of sub-channel carriers of a multi-carrier system.

41. A communication device comprising a modulator having a constellation of available symbol states, the communication device arranged such power associated with null bytes is minimised within the constellation in relation to a transmitted power level associated with information-bearing bytes.

42. A method of transmitting information comprising modulating symbols carrying no information at a relatively low power relative to a power associated with modulated information-bearing symbols.

TRANSMITTING DEVICE 12

FIG.1

EP 0 949 784 A2

FIG.1 Cont'd

# FIG.2